# EUROPÄISCHE PATENTSCHRIFT

(11) **EP 2 217 829 B1**
(45) Veröffentlichungstag und Bekanntmachung des Hinweises auf die Patenterteilung: **07.03.2012**
(21) Anmeldenummer: 08844852.7
(22) Anmeldetag: 21.10.2008
(51) Int. Cl.: F16F 15/12, F16F 15/173, F16H 55/36

(54) **VISKOSE-DREHSCHWINGUNGSDÄMPFER MIT MINDESTENS EINER VON DEN SCHWINGUNGEN EINER KURBELWELLE ENTKOPPELTEN RIEMENSCHEIBE**
VISCOSE TORSIONAL VIBRATION DAMPER HAVING AT LEAST ONE PULLEY DECOUPLED FROM THE VIBRATIONS OF A CRANKSHAFT
AMORTISSEUR DE VIBRATIONS DE TORSION EN MILIEU VISQUEUX PRÉSENTANT AU MOINS UNE POULIE À COURROIE DÉSACCOUPLÉE DES VIBRATIONS D'UN VILEBREQUIN

(30) Priorität: 02.11.2007 DE 102007052284
(43) Veröffentlichungstag der Anmeldung: 18.08.2010
(73) Patentinhaber: Hasse & Wrede GmbH, 12681 Berlin (DE)
(72) Erfinder: KIENER, Wolfgang, 92431 Neunburg vorm Wald (DE); SCHOLZ, Christian, 10439 Berlin (DE)
(74) Vertreter: Mattusch, Gundula
(86) Internationale Anmeldenummer: PCT/EP2008/008881
(87) Internationale Veröffentlichungsnummer: WO 2009/056246

(56) Entgegenhaltungen:
- EP-A- 0 628 746
- DE-A1- 19 708 082
- DE-A1-102006 004 551
- JP-A- 9 310 736

## Beschreibung

Die Erfindung betrifft einen Viskose-Drehschwingungsdämpfer mit einer von den Schwingungen einer Kurbelwelle entkoppelten Riemenscheibe, wobei der Drehschwingungsdämpfer einen in einem mit einem viskosen Medium gefüllte Dämpfergehäuse relativ zu diesem drehbaren Schwungring aufweist und Lager sowie elastische Kupplungen zur relativ verdrehbaren und in Umfangsrichtung elastischen Abstützung der Riemenscheibe gegenüber dem Dämpfergehäuse vorgesehen sind und die Riemenscheibe dem Dämpfergehäuse axial benachbart angeordnet und zur Lagerung dieser Riemenscheibe am Dämpfergehäuse ein Trägerteil vorgesehen ist, welches einen Axialvorsprung, einen an dessen dem Dämpfergehäuse abgewandt liegenden Ende einen radial nach außen gerichteten Flansch und einen sich daran anschließenden und sich in Richtung des Dämpfergehäuses erstreckenden Ringabschnitt aufweist und dass durch den Axialvorsprung, den Flansch und den Ringabschnitt eine Kammer gebildet ist, innerhalb derer die Kupplungselemente angeordnet sind, wobei die dem Dämpfergehäuse axial benachbarte Riemenscheibe auf dem Trägerteil gelagert und über die in der Kammer angeordneten Kupplungselemente relativ zum Dämpfergehäuse in Umfangsrichtung drehelastisch gekuppelt ist.

Ein Viskose-Drehschwingungsdämpfer der gattungsgemäßen Art ist aus der DE 10 2006004551 A1 bekannt.

Von diesem Stand der Technik ausgehend, liegt der vorliegenden Erfindung die Aufgabe zugrunde, bei einem gattungsgemäßen Viskose-Drehschwingungsdämpfer eine Aufnahme von weiteren Riemenscheiben zu ermöglichen, unter Berücksichtigung der einfachen und kompakten Bauweise.

Diese Aufgabe wird erfindungsgemäß dadurch gelöst, dass mindestens eine weitere Riemenscheibe vorgesehen ist, wobei alle weiteren Riemenscheiben über die in der Kammer angeordneten Kupplungselemente relativ zum Dämpfergehäuse in Umfangsrichtung drehelastisch gekuppelt sind

Ein derartiger Viskose-Drehschwingungsdämpfer weist den Vorteil auf, dass alle Riemenscheiben gemeinsam in der Kammer drehelastisch gekuppelt sind, woraus sich insgesamt eine sehr kompakte Bauweise ergibt.

Insbesondere unter dem Gesichtspunkt einer einfachen Montage ist es von Vorteil, wenn die Kupplung aus mehreren, innerhalb der Kammer an der Wandung des Ringabschnittes anliegenden Lagerschuhen, aus in die Lagerschuhen radial eintauchenden Mitnehmern des Ringabschnittes einerseits und der Riemenscheiben andererseits sowie aus elastischen Entkopplungselementen besteht, wobei die Entkopplungselemente in Segmentabschnitten zwischen jeweils zwei benachbarten Lagerschuhen liegen und sich an einander zugewandten Stützflächen zweier Lagerschuhe abstützen.

Hierdurch können sowohl die Lagerschuhe wie auch die Entkopplungselemente in axialer Richtung der Kammer in diese eingeschoben und auf einfachste Art und Weise zu einer gesamten Kupplung montiert werden.

In der DE 197 08 082 A1 sind Dämpfungsanordnungen beschrieben, die jeweils lediglich eine Riemenscheibe aufweisen.

Die als Riemenscheibe ausgebildeten Trägheitselemente 6.1 und 6.2 gemäß Figur 2 in der EP-A-0 628 746 bzw. die Riemenscheiben 22 und 20 gemäß Figur 3 der JP 09-310736 A sind über keine Kupplungselemente gemäß Anspruch 1 der vorliegenden Anmeldung gekuppelt.

Weitere Merkmale der Erfindung sind Gegenstand von Unteransprüchen.

Ein Ausführungsbeispiel der Erfindung ist in den beigefügten Zeichnungen dargestellt und wird im Folgenden näher beschrieben.

Es zeigen:
- Figur 1: einen Längsschnitt durch einen erfindungsgemäßen Viskose-Drehschwingungsdämpfer
- Figur 2: einen Schnitt nach der Linie II-II in Figur 1.

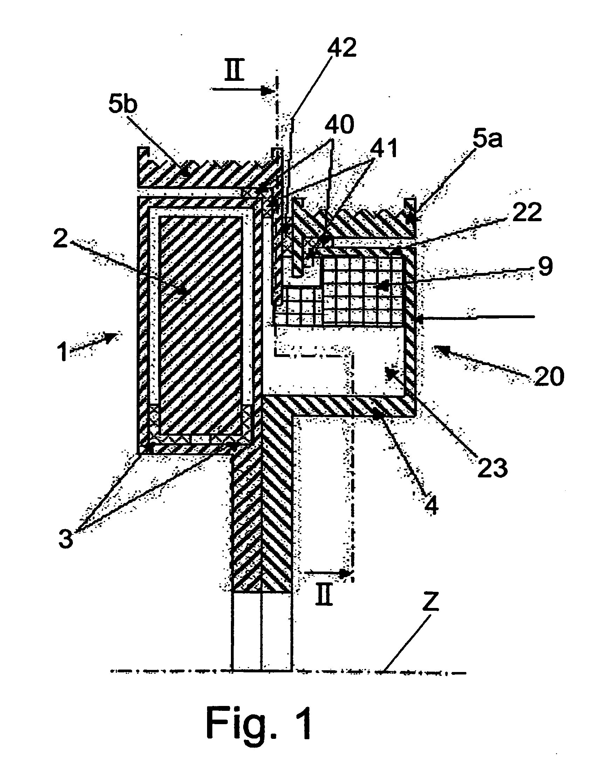

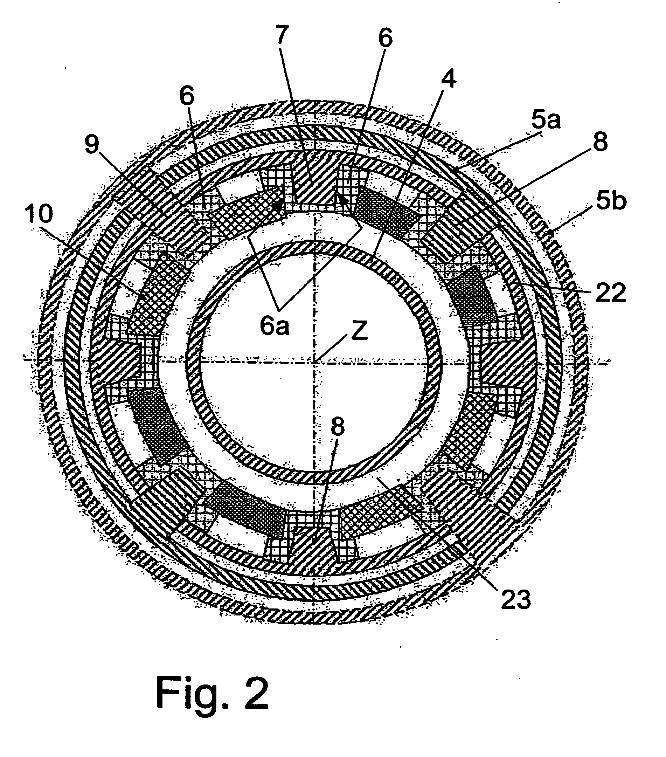

In den Figuren 1 und 2 ist ein Viskose-Drehschwingungsdämpfer gezeigt, bei dem in einem Dämpfergehäuse 1, welches mit einem viskosen Medium gefüllt ist, ein relativ zum Dämpfergehäuse 1 drehbarer Schwungring 2 angeordnet ist. Der Schwungring 2 ist innerhalb des Dämpfergehäuses 1 auf Lagerelementen 3 gelagert.

Mit dem Viskose-Drehschwingungsdämpfer relativ zum Dämpfergehäuse 1 in Umfangsrichtung drehelastisch gekuppelt sind zwei Riemenscheiben 5a und 5b, die somit von den Schwingungen einer nicht dargestellten Kurbelwelle, auf welcher der Viskose-Drehschwingungsdämpfer gelagert ist, entkoppelt sind.

Die mit dem Bezugszeichen 5a bezeichnete Riemenscheibe ist auf einem Trägerteil 20 gelagert, welches fest mit dem Dämpfergehäuse 1 verbunden ist. Dieses Trägerteil 20 weist einen vom Dämpfergehäuse 1 ausgehenden Axialvorsprung 4, einen an dessen dem Dämpfergehäuse 1 abgewandt liegenden Ende radial nach außen gerichteten Flansch 21 und einen Ringabschnitt 22 auf, der sich an den Flansch 21 anschließt und sich in Richtung des Dämpfergehäuses 1 erstreckt. Durch den Axialvorsprung 4, den Flansch 20 und den Ringabschnitt 22 wird ein Kammer 23 gebildet, innerhalb derer weiter unten noch näher beschriebene Kupplungselemente zur drehelastischen Kupplung der Riemenscheiben 5a und 5b vorgesehen sind.

Die mit dem Bezugszeichen 5a versehene Riemenscheibe ist über Lagerelemente 40 und 41 auf dem Ringabschnitt 22 drehbar gelagert.

Die zweite, mit dem Bezugszeichen 5b versehene Riemenscheibe umhüllt das Dämpfergehäuse 1 und ist ebenfalls über Lagerelemente 40 und 41 drehbar auf dem Dämpfergehäuse 1 gelagert.

Zwischen der ersten und der zweiten Riemenscheibe 5a und 5b ist ein Axiallager 42 angeordnet.

Wie die Figur 2 zeigt, sind innerhalb der Kammer 23 Mittel zur relativ zum Dämpfergehäuse in Umfangsrichtung drehelastischen Kupplung der Riemenscheiben 5a und 5b vorgesehen.

Dabei wird erkennbar, dass die Kupplung aus mehreren, innerhalb der Kammer 23 jeweils an der Wandung des Ringabschnittes 22 anliegenden Lagerschuhen 6, aus in die Lagerschuhe 6 radial eintauchenden Mitnehmern 7, 8 und 9 des Ringabschnittes 22 einerseits sowie der Riemenscheiben 5a und 5b andererseits sowie aus elastischen Entkopplungselementen 10 besteht.

Bevorzugt sind die Entkopplungselemente 10 aus Ringsegmenten aus elastischem Material gefertigt.

Die Entkopplungselemente 10 liegen jeweils in Segmentabschnitten zwischen zwei benachbarten Lagerschuhen 6 und stützen sich an einander zugewandten Stützflächen 6a zweier Lagerschuhe 6 ab.

Die Lagerschuhe 6 sind im Anlagebereich der Entkopplungselemente 10 zur Auf nahme der besagten Entkopplungselemente 10 hinterschnitten, wobei die dadurch gebildeten Stützflächen 6a radial auf das Zentrum "Z" des Drehschwingungsdämpfers ausgerichtet sind. Das gleiche gilt für die sich hieran anlegenden Stirnflächen der Entkopplungselemente 10, so dass sich der Gesamtverbund, bestehend aus den Lagerschuhen 6 und den Entkopplungselementen 10 ohne zusätzliche Befestigungselemente innerhalb der Kammer 23 selbst fixiert. Die Lagerschuhe 6 können ebenso wie die Entkopplungselemente 10 in Achsrichtung der Kammer 23 in diese eingeschoben werden, wodurch eine äußerst einfache Montage der gesamten Kupplung resultiert.

Alternativ zu der Gestaltung der Entkopplungselemente 10 in der gezeigten Ringsegment-Form können diese Entkopplungselemente auch aus Druckfedern bestehen, die sich jeweils stirnseitig an den Stützflächen 6a der Lagerschuhe 6 abstützen. Auch hier besteht eine einfache Montagemöglichkeit, da die Druckfedern zum Zwecke der Montage lediglich axial zusammengedrückt und in den Bereich zwischen zwei einander benachbarten Stützflächen 6a eingeführt werden müssen.

Über die Mitnehmer 8 und 9 der beiden Riemenscheiben 5a und 5b sowie über die Lagerschuhe 6, in die diese Mitnehmer 8 und 9 eintauchen, sind die beiden Riemenscheiben 5a und 5b gegenüber dem Dämpfergehäuse 1 in Grenzen relativ zum Dämpfergehäuse 1 verdrehbar und in Umfangsrichtung elastisch abgestützt über die Entkopplungselemente 10.

Durch die beschriebene Konstruktion sind die Lagerschuhe 6 und die Ringsegmente 10, wie schon oben beschrieben, in Radialrichtung formschlüssig selbstfixierend gestaltet.

Die Ringsegmente 10 bestehen vorzugsweise aus Pol yurethan.

## Patentansprüche

1. Viskose-Drehschwingungsdämpfer mit einer von den Schwingungen einer Kurbelwelle entkoppelten Riemenscheibe (5a), wobei der Drehschwingungsdämpfer einen in einem mit einem viskosen Medium gefüllten Dämpfergehäuse (1) relativ zu diesem drehbaren Schwungring (2) aufweist und Lager (40, 41, 42) sowie elastische Kupplungen zur relativ verdrehbaren und in Umfangsrichtung elastischen Abstützung der Riemenscheibe (5a) gegenüber dem Dämpfergehäuse (1) vorgesehen sind und die Riemenscheibe (5a) dem Dämpfergehäuse (1) axial benachbart angeordnet und zur Lagerung dieser Riemenscheibe (5a) am Dämpfergehäuse (1) ein Trägerteil (20) vorgesehen ist, welches einen Axialvorsprung (4), einen an dessen dem Dämpfergehäuse (1) abgewandt liegenden Ende einen radial nach außen gerichteten Flansch (21) und einen sich
daran anschließenden und sich in Richtung des Dämpfergehäuses (1) erstreckenden Ringabschnitt (22) aufweist und dass durch den Axialvorsprung (4), den Flansch (21) und den Ringabschnitt (22) eine Kammer (23) gebildet ist, innerhalb derer die Kupplungselemente angeordnet sind, wobei die dem Dämpfergehäuse (1) axial benachbarte Riemenscheibe (5a) auf dem Trägerteil (20) gelagert und über die in der Kammer (23) angeordneten Kupplungselemente relativ zum Dämpfergehäuse (1) in Umfangsrichtung drehelastisch gekuppelt ist, **dadurch gekennzeichnet, dass** mindestens eine weitere Riemenscheibe (5b) vorgesehen ist, wobei alle weiteren Riemenscheiben (5b) über die in der Kammer (23) angeordneten Kupplungselemente relativ zum Dämpfergehäuse (1) in Umfangsrichtung drehelastisch gekuppelt sind.

2. Viskose-Drehschwingungsdämpfer nach Anspruch 1, **dadurch gekennzeichnet, dass** die Kupplung aus mehreren, innerhalb der Kammer (23) an der Wandung des Ringabschnittes (22) anliegenden Lagerschuhen (6), aus in die Lagerschuhe (6) radial eintauchenden Mitnehmern (7, 8, 9) des Ringabschnittes (22) einerseits und der Riemenscheiben (5a, 5b) andererseits sowie aus elastischen Entkopplungselementen (10) besteht, wobei die Entkopplungselemente (10) in Segmentabschnitten zwischen jeweils zwei benachbarten Lagerschuhen (6) liegen und sich an einander zugewandten Stützflächen (6a) zweier Lagerschuhe (6) abstützen.

3. Viskose-Drehschwingungsdämpfer nach Anspruch 2, **dadurch gekennzeichnet, dass** die Entkopplungselemente (10) aus Druckfedern bestehen.

4. Viskose-Drehschwingungsdämpfer nach Anspruch 2, **dadurch gekennzeichnet, dass** die Entkopplungselemente (10) aus Ringsegmenten (10) aus elastischem Material bestehen.

5. Viskose-Drehschwingungsdämpfer nach Anspruch 4, **dadurch gekennzeichnet, dass** die Ringsegmente (10) aus Polyurethan bestehen.

6. Viskose-Drehschwingungsdämpfer nach einem der vorhergehenden Ansprüche, **dadurch gekennzeichnet, dass** sich die Lagerschuhe (6) und die Ringsegmente (10) in Radialrichtung formschlüssig selbst fixieren.

7. Viskose-Drehschwingungsdämpfer nach Anspruch 6, **dadurch gekennzeichnet, dass** die Lagerschuhe (6) im Anlagebereich der Entkopplungselemente (10) mit hinterschnittenen Stützflächen (6a) ausgestattet sind.

8. Viskose-Drehschwingungsdämpfer nach einem der vorhergehenden Ansprüche, **dadurch gekennzeichnet, dass** die Riemenscheibe (5a) über Lagerelemente (40, 41) auf dem Ringabschnitt (22) und die Riemenscheibe (5b) über Lagerelemente (40, 41) auf dem Dämpfergehäuse (1) drehbar gelagert sind.

9. Viskose-Drehschwingungsdämpfer nach einem der vorhergehenden Ansprüche, **dadurch gekennzeichnet, dass** zwischen der Riemenscheibe (5a) und der Riemenscheibe (5b) ein Axiallager (42) angeordnet ist.

## Claims

1. Viscose torsional vibration damper comprising a pulley (5a) decoupled from the vibrations of a crankshaft, with the torsional vibration damper comprising a fly ring (2) rotatable relative to a damper housing (1) in said housing, which is filled with a viscous medium, and wherein bearings (40, 41, 42) as well as resilient couplers for the relatively rotatable support of said pulley (5a) relative to said damper housing (1), which support is resilient along the peripheral direction, and wherein said pulley (5a) is arranged axially adjacent to said damper housing (1) and a carrier element (20) is provided for support of said pulley (5a) on said damper housing (1), which carrier component includes an axial projection (4), a flange (21) oriented radially outwards on the end of said projection, which is turned away from said damper housing (1), and an annular section (22) joining said flange and extending in a direction towards said damper housing (1), and wherein said axial projection (4), said flange (21) and said annular section (22) form a chamber (23) within which said coupler elements are disposed, with said pulley (5a), which is axially adjacent to said damper housing (1), being supported on said carrier component (20) and being coupled with torsional resilience along the peripheral direction relative to said damper housing (1 ) via said coupler elements disposed in said chamber (23), **characterized in that** at least one further pulley (5b) is provided, with all further pulleys (5b) being coupled with torsional resilience along the peripheral direction relative to said damper housing (1) via said coupler elements disposed in said chamber (23).

2. Viscose torsional vibration damper according to Claim 1, **characterized in that** the coupler consists of a plurality of bearing shoes (6) bearing against the wall of said annular section (22) within said chamber (23), of driving elements (7, 8, 9) radially plunging into said bearing shoes (6), on the one hand, and said pulleys (5a 5b), on the other hand, as well as of resilient decoupling elements (10), wherein said decoupling elements (10) are located in segment sections between two respective adjacent bearing shoes (6) and are supported on mutually facing supporting areas (6a) of two bearing shoes (6).

3. Viscose torsional vibration damper according to Claim 2, **characterized in that** said decoupling elements (10) consist of compression springs.

4. Viscose torsional vibration damper according to Claim 2, **characterized in that** said decoupling elements (10) consist of annular segments (10) made of resilient material.

5. Viscose torsional vibration damper according to Claim 4, **characterized in that** said annular segments (10) are made of polyurethane.

6. Viscose torsional vibration damper according to any of the preceding Claims, **characterized in that** said bearing shoes (6) and said annular segments (10) fix themselves in a positive manner along the radial direction.

7. Viscose torsional vibration damper according to Claim 6, **characterized in that** said bearing shoes (6) are provided with undercut supporting areas (6a) in the bearing region of said decoupling elements (10).

8. Viscose torsional vibration damper according to any of the preceding Claims, **characterized in that** said pulley (5a) is supported for rotation via bearing elements (40, 41) on said annular section (22) and said pulley (5a) is supported for rotation via bearing elements (40, 41) on said damper housing (1).

9. Viscose torsional vibration damper according to any of the preceding Claims, **characterized in that** an axial thrust bearing (42) is arranged between said pulley (5a) and said pulley (5b).

## Revendications

1. Amortisseur de vibrations de torsion en milieu visqueux comprenant une poulie à courroie (5a) découplée des vibrations d'un vilebrequin, cet amortisseur de vibrations de torsion comprenant un anneau volant (2) rotatif relativement à un carter d'amortisseur (1) dans ledit, qui est rempli d'un milieu visqueux, et dans lequel des paliers (40, 41, 42) ainsi que des coupleurs élastiques pour le support relativement rotatif de ladite poulie à courroie (5a) relativement audit carter d'amortisseur (1), ce support étant élastique le long de la direction périphérique, et dans lequel ladite poulie à courroie (5a) est disposée à une position axialement voisine audit carter d'amortisseur (1) et un élément support (20) est disposé pour l'appui de ladite poulie à courroie (5a) audit carter d'amortisseur (1), lequel composant de support renferme une saillie axiale (4), une bride (21) orientée radialement vers l'extérieur sur l'extrémité de ladite saillie, qui est opposée audit carter d'amortisseur (1), et une partie annulaire (22), qui se joigne à ladite bride et s'étend en un sens vers ledit carter d'amortisseur (1), et dans lequel ladite saillie axiale (4), ladite bride (21) et ladite partie annulaire (22) constituent une chambre (23), dans laquelle lesdits éléments coupleurs sont disposés, à ladite poulie à courroie (5a), qui est axialement voisine audit carter d'amortisseur (1), étant appuyée sur ledit composant de support (20) en étant accouplée, à élasticité de torsion, le long de la direction périphérique relativement audit carter d'amortisseur (1) via lesdits éléments coupleurs disposés dans ladite chambre (23), **caractérisé en ce qu'**au moins une poulie à courroie supplémentaire (5b) est disposée, à toutes les autres poulies à courroie (5b) étant accouplées, à élasticité de torsion, le long de la direction périphérique relativement audit carter d'amortisseur (1) via lesdits éléments coupleurs disposés dans ladite chambre (23).

2. Amortisseur de vibrations de torsion en milieu visqueux selon la revendication 1, **caractérisé en ce que** le coupleur consiste en une pluralité de pièces de palier (6), qui portent contre la paroi de ladite partie annulaire (22) à l'intérieur de ladite chambre (23), des éléments d'entraînement (7, 8, 9) se plongeant radialement dans lesdits pièces de palier (6), d'un côté, et lesdits poulies à courroie (5a 5b), d'autre côté, ainsi que des éléments désaccoupleurs élastiques (10), dans lequel lesdits éléments désaccoupleurs (10) sont disposés dans des parties de segments entre deux pièces de palier respectives voisines (6) et s'appuient sur des aires d'appui (6a) en face l'une à l'autre de deux pièces de palier (6).

3. Amortisseur de vibrations de torsion en milieu visqueux selon la revendication 2, **caractérisé en ce que** lesdits éléments désaccoupleurs (10) consistent en ressorts de compression.

4. Amortisseur de vibrations de torsion en milieu visqueux selon la revendication 2, **caractérisé en ce que** lesdits éléments désaccoupleurs (10) consistent en segments annulaires (10) en un matériau élastique.

5. Amortisseur de vibrations de torsion en milieu visqueux selon la revendication 4, **caractérisé en ce que** lesdits segments annulaires (10) sont faits en polyuréthane.

6. Amortisseur de vibrations de torsion en milieu visqueux selon une quelconque des revendications précédentes,
**caractérisé en ce que** lesdites pièces de palier (6) et lesdits segments annulaires (10) se fixent de manière positive le long de la direction radiale.

7. Amortisseur de vibrations de torsion en milieu visqueux selon la revendication 6, **caractérisé en ce que** lesdites pièces de palier (6) sont munies des aires d'appui en contre-dépouille (6a) dans la région portante desdits éléments désaccoupleurs (10).

8. Amortisseur de vibrations de torsion en milieu visqueux selon une quelconque des revendications précédentes,
**caractérisé en ce que** ladite poulie à courroie (5a) est appuyée de manière rotative via des éléments de palier (40, 41) à ladite partie annulaire (22) et ladite poulie à courroie (5a) est appuyée de manière rotative via des éléments de palier (40, 41) audit carter d'amortisseur (1).

9. Amortisseur de vibrations de torsion en milieu visqueux selon une quelconque des revendications précédentes,
**caractérisé en ce qu'**un palier lisse axial de butée (42) est disposé entre ladite poulie à courroie (5a) et ladite poulie à courroie (5b).
